# EUROPEAN PATENT APPLICATION

(11) **EP 2 822 154 A2**
(43) Date of publication of application: **07.01.2015**
(21) Application number: 14168206.2
(22) Date of filing: 14.05.2014
(51) Int. Cl.: H02K 5/14

(54) **Brush plate and electrical motor mounted with the same**

(30) Priority: 04.07.2013 CN 201310278784
(71) Applicant: Bosch Automotive Products (Changsha) Co., Ltd, Changsha, Hunan 410100 (CN)
(72) Inventor: Cui, Guoqiang, 410100 Changsha Hunan (CN); Holzer, Thomas, 76307 Karlsbad (DE); Yang, Sulin, 410100 Changsha Hunan (CN); Koesters, Matthias, 410100 Changsha Hunan (CN)
(74) Representative: Bee, Joachim

(57) **Abstract**

The present invention relates to a brush plate comprising a base plate and an electrical module carried by the base plate, wherein the electrical module is installed on the base plate by means of a sliding pair such that the electrical module is lockable on the base plate at a terminal point of the sliding pair along an installing direction thereof. The present invention also relates to a motor comprising said brush plate.

## Description

### FIELD OF THE INVENTION

The present invention relates to an electrical motor, especially to how to secure a module of an electrical motor having a carbon brush on a brush plate.

### BACKGROUND

An EMC module is widely adopted in modem vehicle parts such as wiper motors, sunroof motors or the like. For example, in a case that an EMC module is mounted in a wiper motor, the EMC module is mainly used to prevent the motor from being influenced by electromagnetic interferences resulted from other vehicle electric parts or inhibit electromagnetic interference of the motor itself. Therefore, the EMC module is necessary for the wiper motor.

Conventionally, the EMC module is loosely mounted in the wiper motor, especially on a brush plate thereof, in such a way that the EMC module is slightly movable on the brush plate. For instance, in order to mate the EMC module with other portions in the motor or to enable parts inside the EMC module themselves to be movable, the conventional EMC module is manufactured and mounted on the brush plate such that it can be moved along a single direction. In this case, when the brush plate together with the EMC module is transported for example to a manufacturing shop from a supplier or even when the motor is being operated, the EMC module can possibly be moved relative to the brush plate and thus can be damaged.

### SUMMARY OF THE INVENTION

In order to solve the technical problem mentioned above, the present invention proposes a brush plate for a motor, especially for a wiper motor on which an EMC module is securely held using an improved securing arrangement. Therefore, the EMC module can be fixed relative to the brush plate during transportation thereof such that no movement can occur between them.

Therefore, it is an object of the present invention to propose a brush plate assembled with an EMC module such that the EMC module can be secured relative to the brush plate without any movement occurring between them.

According to one aspect of the present invention, a brush plate comprising a base plate and an electrical module carried by the base plate is proposed, wherein the electrical module is installed on the base plate by means of a sliding pair such that the electrical module is lockable on the base plate at a terminal point of the sliding pair along an installing direction thereof.

Preferably, the electrical module is an EMC module.

Preferably, the base plate is substantially in the shape of a ring, and the installing direction is substantially consistent with a radial direction of the base plate.

Preferably, an opening is provided on an inner or outer ring edge of the ring-shaped base plate, the electrical module comprises two sockets and at lease one hook, opposite edges of the opening are matched movably within the sockets so as to constitute the sliding pair, and the hook is lockable to a ring edge opposite the ring edge provided with the opening.

Preferably, the ring edge, to which the hook is lockable, is provided with a notch, and the hook is lockable in the notch.

Alternatively, the base plate is substantially in the shape of a ring, and the installing direction is substantially consistent with a thickness direction of the base plate.

Preferably, an opening is provided between inner and outer ring edges of the ring-shaped base plate, and the electrical module is inserted partly through the opening and matched movably in it so as to constitute the sliding pair.

Preferably, at least one hook is provided on the base plate adjacent the opening, a portion of the electrical module is abutted against the ring-shaped base plate, and the hook is lockable to the electrical module.

Preferably, the hook extends substantially perpendicular from the base plate.

Preferably, the electrical module has a longitudinal installing direction substantially perpendicular to the base plate.

Preferably, the brush plate comprises a brush holder installed on the base plate, a carbon in the brush holder is able to connect electrically with the electrical module via a strand.

Preferably, the electrical module comprises a choke which has a longitudinal installing direction substantially perpendicular to the base plate after the electrical module is locked to the base plate.

According to another aspect of the present invention, a vehicle motor, especially a wiper motor or a skylight motor is also proposed, wherein the motor has a rotor, a slip ring disposed coaxially relative to the rotor and a carbon brush contacting with the slip ring, the motor further comprises the brush plate mentioned above, and the carbon brush is mounded in the brush plate.

According to the present invention, after the EMC module is assembled onto the brush plate, the EMC module is directly locked to the brush plate without any other securing tools such as screws, hot riveting welding or the like. Therefore, the EMC module is fixed to the brush plate in a relatively simple and cheap manner.

Other individual features or features which are combined with other features so as to be considered as belonging to the characteristic of the present invention will be described in the attached claims.

The configuration of the present invention and other objectives and beneficial effects thereof will be well understood by description of preferred embodiment in accompany with the drawings.

### BRIEF DESCRIPTION OF THE DRAWINGS

As a part of the description and in order to provide further explanation of the present invent, the drawings illustrate preferred embodiments of the present invention, and together with the description are used to explain the principle of the present invention. In the drawings:
Figure 1 schematically shows a plan view of a brush plate assembled with an EMC module according to a first embodiment of the present invention;
Figure 2 schematically shows a partial perspective view of the brush plate assembled with the EMC module according to the first embodiment of the present invention;
Figure 3 schematically shows a plan view of only the brush plate;
Figure 4 schematically shows a cross-sectional view obtained along a section A-A illustrated in figure 1;
Figure 5 is an enlarged cross-sectional view similar as figure 4, showing an alternative embodiment of the present invention about how a hook of the EMC module is locked with a notch of the brush plate;
Figure 6 schematically shows a plan view of a brush plate assembled with an EMC module according to a second embodiment of the present invention;
Figure 7 schematically shows a plan view of only the brush plate according to the second embodiment of the present invention; and
Figure 8 schematically shows a cross-sectional view obtained along a section A-A illustrated in figure 6.

### DETAILED DESCRIPTION OF THE INVENTION

In the attached drawings, the same components are indicated by the same reference numerals.

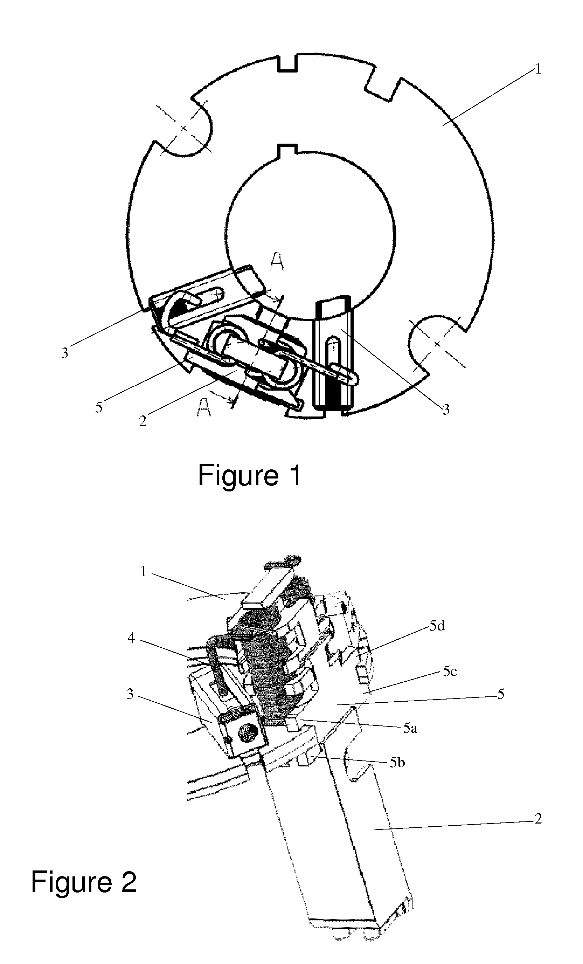

Figure 1 schematically shows a plan view of a brush plate assembled with an EMC module 2 according to a first embodiment of the present invention. The brush plate comprises a base plate 1. The base plate 1 is made of plastic. The EMC module 2 has a main body made of plastic. The base plate 1 is substantially in the shape of a thin ring. The base plate 1 is adapted to electric motors of vehicle, such as wiper motors, sunroof motors or the like.

Two brush holders 3 are illustrated in figure 1 and are provided on a surface of the base plate 1. Each brush holder 3 is used to receive a carbon brush. It is appreciated that each brush holder 3 can be integral with the brush plate 1. As shown in figure 1, the EMC module 2 is secured on the base plate 1 between the two brush holders 3. The EMC module has a longitudinal mounting direction substantially perpendicular to the base plate.

It is appreciated that an electrical motor, especially a wiper motor or a sunroof motor, of a vehicle has a rotor, a slip ring disposed coaxially relative to the rotor and a carbon brush contacting with the slip ring. The brush plate according to the present invention can be provided in the motor. The brush holder can be disposed on the brush plate. The carbon brush is disposed in the brush holder.

Figure 2 schematically shows a partial perspective view of the base plate 1 assembled with the EMC module 2. In the EMC module 2, two chokes 4 are installed. Each choke 4 is used to connect with a copper strand of the respective carbon brush such that the choke 4 electrically contacts with the carbon brush. It is known that, in addition to the helical chokes 4, other necessary electrical and/or mechanical parts can be received in the main body of the EMC module 2. The technical problem aimed to be solved by the present invention is how to secure the EMC module 2 relative to the base plate 1 firmly and the following explanations will focus on this.

The EMC module 2 generally comprises a first securing part 5, which is used to secure the EMC module 2 on the base plate 1. As shown in figure 2, the first securing part 5 is a part of the main body of the EMC module 2. The first securing part 5 is substantially I-shaped. The first securing part 5 is provided with two projections 5a, 5b and 5c, 5d at opposite lateral sides respectively. That is, a pair of projections 5a and 5b are located at one lateral side of the first securing part 5 and a pair of projections 5c and 5d are located at the other lateral side. The two pairs of projections 5a, 5b and 5c, 5d extend in the width direction of the EMC module 2 and are far away from each other. A gap is formed between each pair of projections 5a, 5b and 5c, 5d. The gap has a size substantially corresponding to or slightly less than the thickness of the base plate 1. Therefore, at each lateral side of the first securing part 5, a fork-shaped socket is formed by the respective pair of projections.

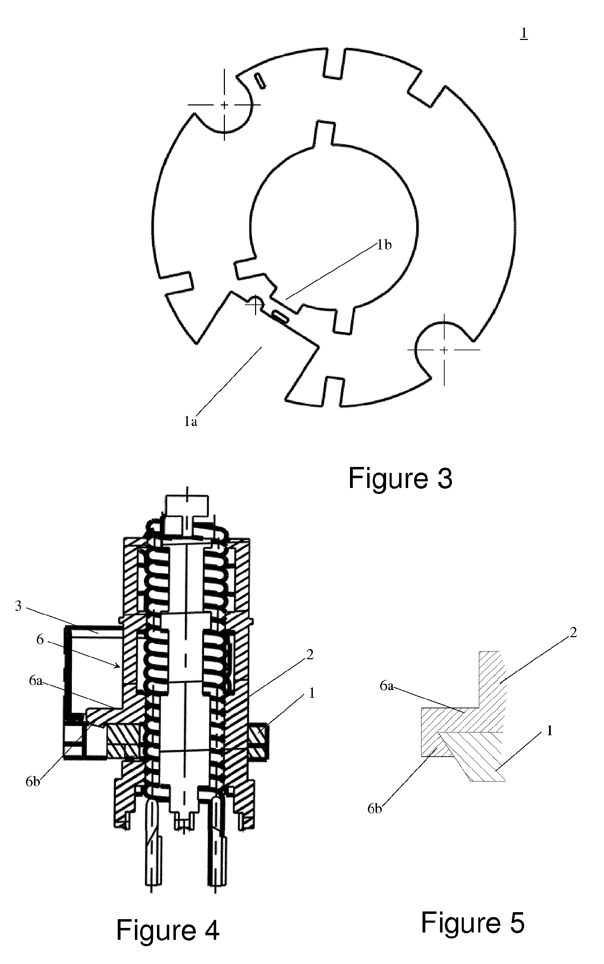

Figure 3 schematically shows a plan view of only the base plate 1. The base plate 1 is formed with a rectangular notch 1a. The notch 1a opens radially and outwardly. The notch 1a occupies a large portion of the width of the ring-shaped base plate 1. The notch 1a is mainly used to receive the main body of the EMC module 2. To this end, the notch 1a has a width substantially corresponding to a vertical distance between both bases of the two fork-shaped sockets on the lateral sides of the first securing part 5. Therefore, as shown in figures 1 and 2, when the EMC module 2 is assembled onto the base plate 1, the fork-shaped sockets can be clamped about opposite edges of the notch 1a. In this case, the projections 5a, 5c and 5b, 5d bear against upper and lower surfaces of the ring-shaped base plate 1 respectively. That is, the assembled EMC module 2 is restrained on the base plate 1 in two directions, i.e. the circumferential direction of the ring-shaped base plate 1 and a direction perpendicular to the plane of the base plate 1.

As shown in figure 3, the base plate 1 is also provided with a little rectangular notch 1b which is opposed to the notch 1a along the width direction of the ring-shaped base plate 1. The notch 1b opens radially and inwardly. Obviously, the rectangular notch 1b has a size greatly less than the notch 1a. Further, it can be seen that the notch 1b is middle circumferentially relative to the notch 1a. Alternatively, the notch 1b can be provided such that it is offset towards one end of the notch 1a. In figure 3, the base plate 1 is illustrated with some other shaped openings. It should be understood that those other shaped openings are adapted to other functions of the base plate. For instance, the base plate 1 can be a base plate having any other suitable functional characters.

Figure 4 schematically shows a cross-sectional view obtained along a section A-A illustrated in figure 1. The main body of the EMC module 2 is also provided with a second securing part 6. As shown in figure 4, the second securing part 6 is apart from the first securing part 5 with respect to a longitudinal axis of the main body of the EMC module 2. The second securing part 6 comprises a cantilever 6a extending therefrom in a direction apart from the first securing part 5, which cantilever is substantially perpendicular to the longitudinal axis of the main body of the EMC module 2. A hook 6b extends in parallel with the longitudinal axis of the main body of the EMC module 2 from one end of the cantilever 6a.

As shown in figures 1 and 4, after the EMC module 2 is assembled onto the base plate 1, the hook 6b of the second securing part 6 of the EMC module 2 can be hooked into the notch 1b in such a way that the EMC module 2 is restrained radially on the brush plate 1. In the illustrated embodiment, the hook 6b is hooked into the notch 1b on the upper surface of the brush plate 1. However, alternatively, the hook 6b can be hooked into the notch 1b on the lower surface of the base plate 1. Upon assembling the EMC module 2 onto the base plate 1, the main body of the EMC module 2 is inserted with its first and second securing parts 5 and 6 into the notch 1a such that the sockets are clamped about the respective edges of the notch 1a. Meanwhile, the hook 6b passes over the upper or lower surface of the base plate 1. As the fork-shaped sockets arrive at a suitable distance from the outer periphery of the base plate 1, the hook 6b is just locked into the notch 1b. Therefore, according to the configuration described above, after the EMC module 2 is assembled onto the base plate 1, the former can be securely fixed to the latter. No movement can occur between them.

In the embodiment described above, the notch 1b has a substantially straight wall for engaging with the hook 6b of the EMC module 2. In order to obtain a strengthening securing effect of the EMC module 2 on the base plate 1, the notch 1b and the hook 6b can be configured in many other or various ways. For example, figure 5 shows an alternative embodiment how the EMC module 2 is fixed to the base plate 1. This embodiment is distinguished from the first embodiment only in that the EMC module 2 is provided with a hook 6c which is shaped in a manner complementary to an engaging wall of the notch 1b. Specifically, as shown in figure 5, the second securing part 6 of the EMC module 2 has a hook 6c extending from the cantilever 6a in parallel with the longitudinal axis of the main body of the EMC module 2. The hook 6c has an oblique wall which is tilted relative to the cantilever 6a of the second securing part 6. The notch 1b has a mating oblique wall which is tilted relative to the plane of the base plate 1 in the same slope of the hook 6c. Therefore, when the EMC module 2 is assembled onto base plate 1, the oblique wall of the hook 6c is easily snapped onto the oblique wall of the notch 1b after the edge of the hook 6c passes radially over the edge of the notch 1b. In this embodiment, the hook 6c is formed with a wedge-shaped groove for engaging with a complementary wedge-shaped edge of the notch 1b such that the EMC module 2 is secured on the brush plate 1 not only radially but also longitudinally (i.e. in the height direction of the EMC module 2).

In the embodiments described above, it is appreciated that more than one hook 6b, 6c can be provided on the second securing part 6 of the EMC module 2 and correspondingly more than one notch 1b can be provided in the brush plate 1. For example, two or more hooks 6b, 6c apart from each other are provided on the second securing part 6 so as to engage with respective notches 1b in the brush plate 1. Preferably, in order to facilitate snapping onto the oblique wall of the notch 1b, the oblique wall of the hook 6c is shorter than the oblique wall of the notch 1b, as illustrated in figure 5.

Alternatively, it is possible that the notches 1a and 1b can be reversed with respect to each other. Specifically, the notch 1a is provided on the inner edge of the ring-shaped brush plate 1 and opens radially and inwardly, and the notch 1b is provided on the outer edge of the ring-shaped brush plate 1 and opens radially and outwardly.

According to an idea of the present invention, the EMC module is installed on the base plate by means of a sliding pair. The EMC module is lockable to the base plate at a terminal point of the sliding pair in an installing direction thereof. That is, after the EMC module is moved into place by means of the sliding pair along the installing direction, the EMC module is locked and snapped onto the base plate. In the above embodiment, the installing direction extends substantially along a radial direction of the base plate. For instance, in the above embodiment, after the EMC module is moved into place along the radial direction of the base plate from an outer periphery to an inner periphery of the base plate, the EMC module is locked on the base plate via the hook and the socket. It is appreciated that the EMC module can be designed such that, after it is moved into place along the radial direction of the base plate from the inner periphery to the outer periphery of the base plate, the EMC module is locked onto the base plate via the hook and the socket.

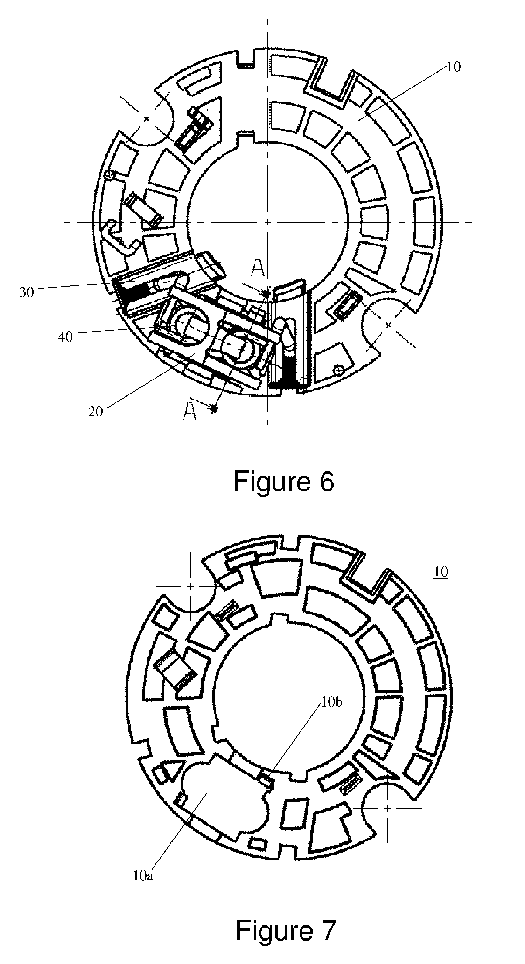

Figure 6 schematically shows a plan view of a base plate 10 assembled with an EMC module 20 according to a second embodiment of the present invention. The base plate 10 is made of plastic. The EMC module 20 has a main body made of plastic. The base plate 10 is substantially in the shape of a thin ring.

Two brush holders 30 are illustrated in figure 6 and are provided on a surface of the base plate 10. Each brush holder 30 is used to receive a carbon brush. It is appreciated that each brush holder 30 can be integral with the base plate 10. As shown in figure 6, the EMC module 20 is secured on the base plate 10 between the two brush holders 30. In the EMC module 20, two chokes 40 are installed. Each choke 40 is used to connect with a copper strand of the respective carbon brush such that the choke 40 electrically contacts with the carbon brush. It is known that, in addition to the chokes 40, other necessary electrical and/or mechanical parts can be received in the main body of the EMC module 20.

Figure 7 schematically shows a plan view of only the base plate 10 according to the second embodiment of the present invention. In contrast to the notch 1a which opens radially and outwardly in the first embodiment, the ring-shaped base plate 10 comprises a rectangular opening 10a which is enclosed by edges. In this plan view, it can be seen that the opening 10a defines a substantially rectangular shape with some of its edges such that the opening 10a can receive the main body of the EMC module 20. Therefore, when the EMC module 20 is inserted into the opening 10a of the brush plate 10, some walls of the main body of the EMC module 20 can be pressed against the illustrated and flat edges (walls) of the opening 10a such that the EMC module 20 is restrained in the plane where the base plate 10 is located. That is, the EMC module 20 is immovable in this plane.

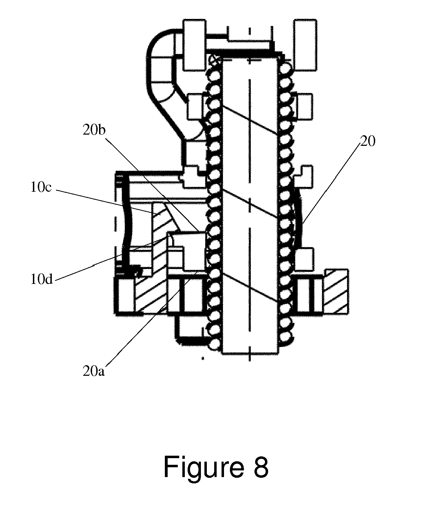

Compared with the first embodiment, design of the opening 10a enables the base plate 10 to have a greater strength because the opening 10 does not extend to the outer or inner edge of the ring-shaped base plate 10. A securing part 10b is integrally provided on the base plate 10 adjacent one edge of the opening 10a. As shown in figure 8, the securing part 10b extends perpendicular to the plane where the brush plate 10 is located. Formed at a free end of the securing part 10b is a hook 10c. The hook 10c is used to lock the EMC module 20 on the base plate 10 in the height direction of the EMC module 20.

The main body of the EMC module 20 is provided with a securing part 20a. As shown in figure 8, the securing part 20a is in the shape of a boss projecting perpendicular to a longitudinal axis of the EMC module 20. The boss-shaped securing part 20a has a width which can be slightly greater than the width of the opening 10a of the base plate 10 such that, after the EMC module 20 is assembled onto the base plate 10, at least a portion of the securing part 20a can be used to abut a surface of the base plate 10.

The hook 10c of the brush plate 10 has a face 10d for engaging with the boss-shaped securing part 20a of the main body of the EMC module 20. The boss-shaped securing part 20a of the EMC module 20 has a face 20b for engaging with the face 10d of the hook 10c. The distance between the face 10d and the surface of the base plate 10, which the securing part 20a abuts, is substantially equal to the distance between the face 20b and a face of the securing part 20a via which the securing part 20a abuts the surface of the base plate 10. According to this arrangement, when the EMC module 20 is assembled onto the base plate 10, the face 10d of the hook 10c of the base plate 10 is engaged with the face 20b of the securing part 20a with another parallel face of the securing part 20a abutting the surface of the base plate 10. In this way, the EMC module 20 is secured on the base plate 10 in the height direction. Therefore, by the opening 10a and the hook 10c of the base plate 10 cooperating with the securing part 20a of the EMC module 20, the EMC module 20 can be securely fixed to the base plate 10.

In this embodiment, the installing direction is consistent substantially with a thickness direction of the base plate. Specifically, the EMC module is inserted into the base plate from top to bottom along the thickness direction of the base plate and then is locked in the base plate via the hook. It is appreciated that the EMC module can be also designed in such a way that it is inserted into the base plate from bottom to top along the thickness direction of the base plate and then is locked in the base plate via the hook.

It is appreciated that more than one hook 10c can be provided on the base plate 10 adjacent the opening 10a so as to obtain a strengthening securing effect of the EMC module 20 on the base plate 10. Alternatively, the hook 10c of the base plate 10 and the securing part 20a of the EMC module 20 can be shaped similarly as shown in figure 5.

Although the present invention is shown and explained by specific embodiments, the present invention is not limited by these explained particulars. Contrarily, various modifications of the present invention are possible within the scope of attached claims and their equivalents.

## Claims

1. A brush plate comprising a base plate and an electrical module carried by the base plate, wherein the electrical module is installed on the base plate by means of a sliding pair such that the electrical module is lockable on the base plate at a terminal point of the sliding pair along an installing direction thereof.

2. The brush plate as claimed in claim 1, wherein the electrical module is an EMC module.

3. The brush plate as claimed in any one of the preceding claims, wherein the base plate is substantially in the shape of a ring, and the installing direction is substantially consistent with a radial direction of the base plate.

4. The brush plate as claimed in claim 3, wherein an opening is provided on an inner or outer ring edge of the ring-shaped base plate, the electrical module comprises two sockets and at lease one hook, opposite edges of the opening are matched movably within the sockets so as to constitute the sliding pair, and the hook is lockable to a ring edge opposite the ring edge provided with the opening.

5. The brush plate as claimed in claim 4, wherein the ring edge, to which the hook is lockable, is provided with a notch, and the hook is lockable in the notch.

6. The brush plate as claimed in claim 1 or 2, wherein the base plate is substantially in the shape of a ring, and the installing direction is substantially consistent with a thickness direction of the base plate.

7. The brush plate as claimed in claim 6, wherein an opening is provided between inner and outer ring edges of the ring-shaped base plate, and the electrical module is inserted partly through the opening and matched movably in it so as to constitute the sliding pair.

8. The brush plate as claimed in claim 7, wherein at least one hook is provided on the base plate adjacent the opening, a portion of the electrical module is abutted against the ring-shaped base plate, and the hook is lockable to the electrical module.

9. The brush plate as claimed in any one of the preceding claims, wherein the electrical module has a longitudinal installing direction substantially perpendicular to the base plate.

10. The brush plate as claimed in any one of the preceding claims, wherein the brush plate comprises a brush holder installed on the base plate, a carbon in the brush holder is able to connect electrically with the electrical module via a strand.

11. The brush plate as claimed in any one of the preceding claims, wherein the electrical module comprises a choke which has a longitudinal installing direction substantially perpendicular to the base plate after the electrical module is locked to the base plate.

12. A vehicle motor, especially a wiper motor or a sunroof motor, having a rotor, a slip ring disposed coaxially relative to the rotor and a carbon brush contacting with the slip ring, wherein the motor further comprises a brush plate as claimed in any one of the preceding claims, and the carbon brush is mounded in the brush plate.
